# EUROPÄISCHE PATENTANMELDUNG

(11) **EP 1 405 755 A1**
(43) Veröffentlichungstag der Anmeldung: **07.04.2004**
(21) Anmeldenummer: 03020662.7
(22) Anmeldetag: 11.09.2003
(51) Int. Cl.: B60N 2/02, B60N 2/00

(54) **Sitzeinstellvorrichtung**

(30) Priorität: 04.10.2002 DE 10246318
(71) Anmelder: Bayerische Motoren Werke Aktiengesellschaft, 80809 München (DE)
(72) Erfinder: Borke, Danny, 80935 München (DE)

(57) **Zusammenfassung**

Sitzeinstellvorrichtung eines Kraftfahrzeuges und Verfahren zu ihrer Ansteuerung, mit einer Sitzdatenerfassungseinrichtung zur Ermittlung von einer Sitzeinstellung eines Fahrzeugsitzes zugeordneten Einstelldaten, einem Sitzdatenspeicher zur Abspeicherung der Einstelldaten, und einer Sitzsteuerungsvorrichtung zur Einstellung einer vorgegebenen Sitzeinstellung anhand der zugeordneten Einstelldaten, wobei der Fahrzeugsitz zur Realisierung vielfältiger Einstellmöglichkeiten mehrere ansteuerbare Stellmotoren aufweist, wobei die Sitzdatenerfassungseinrichtung (6) als stereoskopische Optik (7) mit einem zugeordneten Bilddatenrechner ausgebildet ist, und dass die stereoskopische Optik (7) innerhalb der Fahrgastzelle (10) des Kraftfahrzeuges (1) mit Blickrichtung auf die Sitzflächen des Fahrzeugsitzes angeordnet ist

## Beschreibung

Die Erfindung betrifft eine Sitzeinstellvorrichtung eines Kraftfahrzeuges, mit einer Sitzdatenerfassungseinrichtung zur Ermittlung von einer Sitzeinstellung eines Fahrzeugsitzes zugeordneten Einstelldaten, einem Sitzdatenspeicher zur Abspeicherung der Einstelldaten, und einer Sitzsteuerungsvorrichtung zur Einstellung einer vorgegebenen Sitzeinstellung anhand der zugeordneten Einstelldaten, wobei der Fahrzeugsitz zur Realisierung vielfältiger Einstellmöglichkeiten mehrere ansteuerbare Stellmotoren aufweist.

Die Erfindung betrifft des weiteren ein Verfahren zur Steuerung einer Sitzeinstellvorrichtung, nach dem mit einer Sitzdatenerfassungseinrichtung die einer Sitzeinstellung eines Fahrzeugsitzes zugeordneten Einstelldaten erfasst werden, die Einstelldaten in einem Sitzdatenspeicher abgespeichert werden, und mittels einer Sitzsteuerungsvorrichtung eine vorgegebene Sitzeinstellung anhand der Einstelldaten eingestellt wird.

In modernen Kraftfahrzeugen, insbesondere bei Pkws der Ober- und Luxusklasse, zählen Fahrzeugsitze, die mittels mehrerer zumeist als Elektromotoren ausgebildeter Stellmotoren in vielfältiger Weise auf die individuellen Bedürfnisse der Fahrzeuginsassen einstellbar und die jeweils gewählte Sitzeinstellung zur späteren Rekonstruktion in einem Sitzdatenspeicher (Sitzmemory) abspeicherbar ist, schon zur Standardausrüstung. Bei preisgünstigeren Pkws sind derartige Fahrzeugsitze, zumindest was den Fahrersitz angeht, häufig optional lieferbar. Stellvertretend für die vielen Varianten motorisch verstellbarer Fahrzeugsitze wird auf die in der GB 20 72 881 A, der DE 36 15 210 A1, der DE 36 15 216 A1, und der DE 195 22 897 A1 beschriebenen Fahrzeugsitze verwiesen. Zur Erfassung der jeweiligen Sitzeinstellung eines derartigen Fahrzeugsitzes ist dieser nach dem Stand der Technik mit einer Vielzahl von Positionssensoren, z.B. Potentiometern, und zugeordneten Signalleitungen ausgerüstet, was nachteilig relativ aufwendig und teuer ist, und darüber hinaus mit einer Vielzahl an Störungsmöglichkeiten verbunden ist. Ein weiterer Nachteil besteht darin, dass bei der Rekonstruktion, d.h. dem Abruf und der Einstellung einer bestimmten, zuvor erfassten und abgespeicherten Sitzeinstellung diese anhand der Sensordaten relativ zu sitzspezifischen Bauteilen, wie Sitzgelenken und - scharnieren, vorgenommen wird. Bei einer über die Nutzungsdauer eines PKW zwangsläufig auftretenden geometrischen Veränderung des Fahrzeugsitzes, die z.B. durch ein Setzen der Sitzpolsterung und durch eine dauerhafte Verformung des Sitzgestells bewirkt werden kann, stimmt die automatisch abgerufene und eingestellte Sitzeinstellung mit zunehmender Nutzungsdauer immer weniger mit der ursprünglich einmal erfassten und abgespeicherten Sitzeinstellung überein. Insbesondere bei häufigem Fahrerwechsel ist dann oft eine manuelle Korrektur oder eine Erneuerung der abgespeicherten Sitzeinstellungen erforderlich.

Es ist daher die Aufgabe der vorliegenden Erfindung, eine Sitzeinstellvorrichtung anzugeben, die bei einfachem Aufbau und preisgünstiger Herstellung eine hohe Funktionssicherheit aufweist. Des weiteren soll ein Verfahren zur Steuerung einer derartigen Sitzeinstellvorrichtung angegeben werden.

Die Aufgabe die Sitzeinstellvorrichtung betreffend wird erfindungsgemäß in Verbindung mit dem Oberbegriff des Anspruches 1 dadurch gelöst, dass die Sitzdatenerfassungseinrichtung als stereoskopische Optik mit einem zugeordneten Bilddatenrechner ausgebildet ist, und dass die stereoskopische Optik innerhalb der Fahrgastzelle des Kraftfahrzeuges mit Blickrichtung auf die Sitzflächen des Fahrzeugsitzes angeordnet ist.

Vorteilhafte Ausgestaltungen der erfindungsgemäßen Sitzeinstellvorrichtung sind in den Unteransprüchen 2 bis 10 angegeben.

Die Aufgabe das Steuerungsverfahren betreffend wird erfindungsgemäß in Verbindung mit dem Oberbegriff des Anspruches 11 dadurch gelöst, dass mittels einer stereoskopischen Optik Bilder im Bereich der Sitzflächen des Fahrzeugsitzes aufgenommen werden, dass die Bilder in einem zugeordneten Bilddatenrechner zu Geometriedaten einer 3D-Oberflächenkontur ausgewertet werden, dass die Geometriedaten in einem Sitzdatenrechner zu signifikanten Positionsdaten reduziert werden, und dass die Positionsdaten als Einstelldaten des Fahrzeugsitzes verwendet werden.

Vorteilhafte Ausgestaltungen des erfindungsgemäßen Verfahrens sind in den Unteransprüchen 12 bis 16 angegeben.

Durch die Verwendung einer stereoskopischen Optik zur Erfassung der Sitzeinstellung eines Fahrzeugsitzes kann eine Vielzahl von in und an dem Fahrzeugsitz angeordneten Positionssensoren und der zugeordneten Signalleitungen eingespart werden. Damit ist auch die Anzahl der Störungsmöglichkeiten der Sitzsteuerung deutlich reduziert, so dass sich eine höhere Funktionssicherheit ergibt. Als wesentlicher Vorteil gegenüber dem Stand der Technik ergibt sich aber, dass bei einem durch einen Fahrzeuginsassen besetzten Fahrzeugsitz die optisch sichtbare Oberflächenkontur des Fahrzeuginsassen ermittelt werden kann, diese auf signifikante geometrische Punkte, wie z.B. die Augen und die Arm- und Beingelenke, reduziert werden kann, und anhand dieser zuvor abgespeicherten Einstelldaten eine Rekonstruktion der Sitzeinstellung möglich ist, wobei verschleißabhängige Veränderungen der Sitzgeometrie automatisch ausgeglichen werden.

Die stereoskopische Optik umfasst bevorzugt zwei seitlich beabstandet voneinander angeordnete CCD-Kameras, die, ausgerichtet auf das Objekt Fahrzeugsitz, ortsfest in dem Kraftfahrzeug befestigt sind. Alternativ dazu ist es aber auch möglich, dass die stereoskopische Optik eine einzige CCD-Kamera umfasst, und dass die CCD-Kamera mittels eines Kamera-Stellantriebes und einer Führungsvorrichtung zwischen zwei seitlich voneinander beabstandeten Positionen verfahrbar ist. Je nach Ausbildung und Anordnung der verwendeten CCD-Kamera kann diese starr ausgerichtet sein oder zur Änderung der Blickrichtung schwenkbar sein.

Die erfindungsgemäße Sitzeinstellvorrichtung wird vorwiegend für den Fahrersitz Verwendung finden, da eine optimale Sitzeinstellung insbesondere für den Fahrer im Hinblick auf die Fahrsicherheit von besonderer Bedeutung ist. Bei entsprechender Ausbildung und Anordnung der CCD-Kameras kann aber auch der Beifahrersitz erfasst und dessen Verstellfunktionen in die Sitzeinstellvorrichtung integriert werden.

Bei Verwendung von zwei CCD-Kameras sind diese dann vorteilhaft beidseitig im Bereich der A-Säulen des Kraftfahrzeuges mit rückwärtiger Blickrichtung auf die Sitzflächen des bzw. der betreffenden Vordersitze(s) angeordnet. Als Einbauorte bieten sich die Eckbereiche zwischen Frontscheibe, Fahrzeugdach und A-Säule (Dachecken) sowie zwischen Frontscheibe, Armaturenbrett und A-Säule (Türecken) an. Bei Verwendung einer einzigen verfahrbaren CCD-Kamera kann diese innerhalb einer im Übergang zwischen der Frontscheibe und dem Fahrzeugdach angeordneten Dachkonsole zwischen den Dachecken bzw. innerhalb des Armaturenbrettes oder auf dem Armaturenbrett zwischen den Türecken verfahren werden. Durch den jeweils großen seitlichen Abstand der Kamerapositionen ergibt sich eine gute Auflösung der 3D-Oberflächenkontur des (leeren) Fahrzeugsitzes bzw. des Fahrzeuginsassen (Fahrer und Beifahrer) und des (besetzten) Fahrzeugsitzes.

Bei Fahrzeugen mit einzeln ausgebildeten und verstellbaren Fahrzeugsitzen im Fond, was insbesondere für Chauffeurlimousinen der Ober- und Luxusklasse zutrifft, kann die erfindungsgemäße Sitzeinstellvorrichtung ohne Einschränkungen auch für die Rücksitze verwendet werden. In diesem Fall scheint eine Anordnung der CCD-Kameras in einer Dachkonsole im Bereich der B-Säulen vorteilhaft zu sein.

Zur besseren Erfassung der Fahrzeuginsassen und / oder der Fahrzeugsitze kann mindestens eine zusätzliche CCD-Kamera vorgesehen sein, deren optische Achse zu der durch die optischen Achsen der stereoskopischen Optik gebildete Ebene geneigt ist. Hierdurch werden Hinterschneidungen der 3D-Oberflächenkontur des Fahrzeuginsassen und / oder des Fahrzeugsitzes, die sich in einer der beiden Kamerapositionen ergeben können, aufgelöst und somit die Erfassung der 3D-Oberflächenkontur und damit der Einstelldaten des betreffenden Fahrzeugsitzes verbessert. Bei der zuvor angegebenen Platzierung der CCD-Kameras in den Dach- oder Türecken ist die zusätzliche CCD-Kamera vorteilhaft mittig im bzw. auf dem Armaturenbrett oder mittig in dem Dachwinkel zwischen Frontscheibe und Fahrzeugdach, z.B. in einer Dachkonsole, angeordnet.

Zur weiteren Verbesserung der Erfassung der 3D-Oberflächenkontur kann zur Kompensation von optischen Störungen eine stereoskopische Zusatzoptik vorgesehen sein, wobei durch diese Zusatzoptik Bilder in einem von der vorhandenen stereoskopischen Optik abweichenden Frequenzbereich erfassbar sind. Arbeitet die vorhandene stereoskopische Optik im Bereich des sichtbaren Lichts, was aufgrund preiswert verfügbarer CCD-Video- und Digitalkameras sinnvoll ist, so kann die stereoskopische Zusatzoptik beispielsweise im Infrarotbereich arbeiten.

Bei den meisten stereoskopischen Verfahren, wie sie z.B. aus der DE 33 28 753 A1 und der EP 0 541 598 B1 bekannt sind, werden regelmäßige oder unregelmäßige grafische Strukturen auf das Zielobjekt projiziert und anhand der Größe und Verzerrung dieser Strukturen auf der Oberfläche des Zielobjektes die Koordinaten und die Krümmung der 3D-Oberflächenkontur ermittelt. In dem vorliegenden Verfahren kann zum Vorteil der Fahrzeuginsassen auf die Projektion von grafischen Strukturen verzichtet werden, da die Fahrzeuginsassen durch ihren Körperbau und ihr Gesicht hinreichend strukturiert sind, und darüber hinaus durch die stereoskopische Optik auch Referenzpunkte der Fahrzeugsitze und der Karosserie des betreffenden Fahrzeuges erfasst werden. Bei einem leeren Fahrzeugsitz wird somit die 3D-Oberflächenkontur des Fahrzeugsitzes ermittelt und zu signifikanten Positionsdaten des Fahrzeugsitzes reduziert. Der Fahrzeuginsasse (Fahrer, Beifahrer) kann damit eine gewünschte Sitzeinstellung abrufen und automatisch einstellen lassen, bevor er das Fahrzeug betritt und auf dem Fahrzeugsitz Platz nimmt. Die vorgenommene Sitzeinstellung kann sich dann allerdings nur an sitz- und fahrzeugspezifischen Parametern orientieren. Bei besetztem Fahrzeugsitz wird dagegen die 3D-Oberflächenkontur des Fahrzeuginsassen und des Fahrzeugsitzes ermittelt und zu signifikanten personenbezogenen Positionsdaten des Fahrzeugsitzes mit Bezug zu dem betreffenden Fahrzeuginsassen reduziert. Die vorgenommene Sitzeinstellung orientiert sich dann im wesentlichen an der Sitzposition des Fahrzeuginsassen relativ zu dem Fahrzeug und nutzungs- bzw. verschleißbedingte Änderungen der Sitzgeometrie, die über die Fahrzeuglebensdauer durch ein Setzen der Sitzpolster und eine Verformung des Sitzgestells entstehen können, werden automatisch kompensiert. Da durch die Sitzeinstellvorrichtung bzw. das betreffende Verfahren die Fahrerposition relativ zum Fahrzeug ermittelt wird, bietet es sich an, diese Information auch zur adaptiven Steuerung der Airbags (Auslösezeitpunkt, Auslösgeschwindigkeit) zu verwenden. Damit bei besetztem Fahrzeugsitz die später abgerufene und automatisch eingestellte Sitzeinstellung tatsächlich der gewünschten Einstellung entspricht, sollte der Fahrzeuginsasse vor dem Abspeichern einer Sitzeinstellung und vor dem Abruf einer gespeicherten Sitzeinstellung die richtige Positionierung auf dem Fahrzeugsitz (Fahrhaltung) einnehmen und hierzu durch ein akustisches und / oder optisches Signal oder durch eine Sprachausgabe eines Kommunikationssystems,. wie z.B. "Bitte Fahrhaltung einnehmen!", auf die Einnahme der Fahrhaltung hingewiesen werden.

Weitere Einzelheiten der Erfindung ergeben sich aus der nachstehenden, ausführlichen Beschreibung und der beigefügten Zeichnung, in der eine bevorzugte Ausführungsform der Erfindung beispielsweise veranschaulicht ist.

In der Zeichnung zeigt:

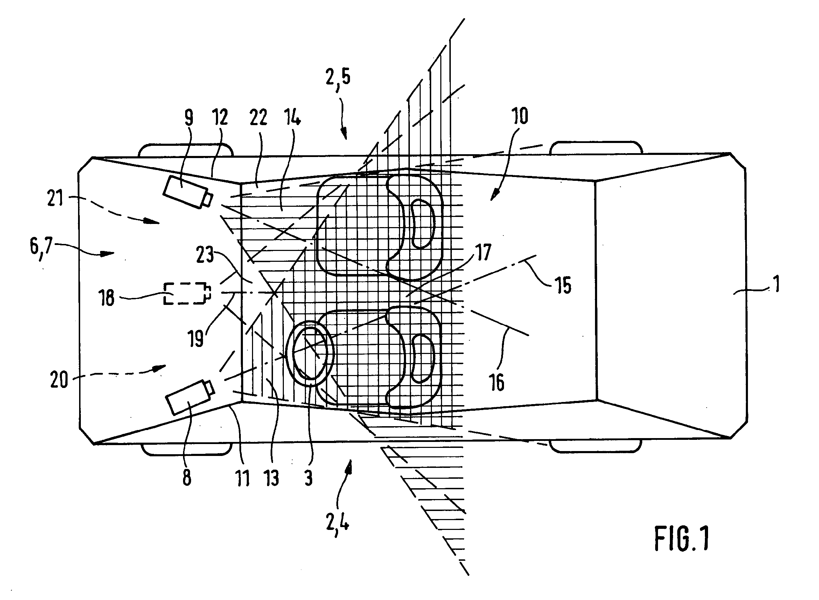

- Figur 1:: Eine Sitzeinstellvorrichtung eines Kraftfahrzeuges in schematischer Form.

Das in Fig. 1 schematisch abgebildete Kraftfahrzeug 1 weist zwei Fahrzeugsitze 2 auf, einen hinter einem Lenkrad 3 positionierten Fahrersitz 4 und einen seitlich daneben angeordneten Beifahrersitz 5. Zur Erfassung der Sitzeinstellungen dieser beiden Fahrzeugsitze 2 ist eine Sitzdatenerfassungseinrichtung 6 vorgesehen, die erfindungsgemäß als stereoskopische Optik 7 mit einem zugeordneten, vorliegend nicht abgebildeten Bilddatenrechner ausgebildet ist. Die stereoskopische Optik 7 umfasst beispielhaft zwei CCD-Kameras 8, 9, die innerhalb des Fahrgastzelle 10 des Kraftfahrzeuges 1 mit rückwärtiger Blickrichtung auf die beiden Fahrzeugsitze 2 beidseitig jeweils im Bereich der A-Säulen 11, 12 angeordnet und vorliegend starr ausgerichtet sind. Der Erfassungsbereich 13 der ersten, fahrerseitigen CCD-Kamera 8 ist, bezogen auf das Kraftfahrzeug 1, quer schraffiert, der Erfassungsbereich 14 der zweiten, beifahrerseitigen CCD-Kamera 9 ist längs schraffiert dargestellt. Die beiden CCD-Kameras 8, 9 sind mit ihren optischen Achsen 15, 16 derart zueinander und auf die Fahrzeugsitze 2 ausgerichtet, dass sich durch Überschneidung der beiden Erfassungsbereiche 13, 14 im Bereich der Fahrzeugsitze 2 ein effektiver Erfassungsbereich 17 der stereoskopischen Optik 7 ergibt, der, wie in Fig. 1 kreuzschraffiert dargestellt, eine Ermittlung der 3D-Oberflächenkontur der Fahrzeugsitze 2 und der ggf. auf diesen befindlichen Insassen (Fahrer und Beifahrer) ermöglicht.

Erfindungsgemäß ist vorgesehen, dass zur Erfassung von personenbezogenen Einstelldaten z.B. des Fahrersitzes 4 ein bestimmter Fahrer auf dem Fahrzeugsitz 2 Platz nimmt, seine individuelle Sitzeinstellung durch eine manuelle Bedienung der betreffenden Stellmotoren vornimmt und dann durch eine Kommandoeingabe (Drücken eines Bedienknopfes oder verbales Kommando) die Erfassung und Abspeicherung der Sitzeinstellung veranlasst. Dabei wird zunächst durch die stereoskopische Optik 7 unter gleichzeitiger Erfassung von Referenzpunkten der Fahrgastzelle 10 und des Fahrersitzes 4 unter Verwendung des zugeordneten Bilddatenrechners die 3D-Oberflächenkontur des Fahrers und des Fahrersitzes 4 absolut und relativ zur Fahrgastzelle 10 ermittelt. Die Datenmenge der 3D-Oberflächenkontur wird dann in einem Sitzdatenrechner auf wenige signifikante Positionsdaten, wie Koordinaten der Referenzpunkte von Fahrer (Augen, Arm- und Beingelenke) und Fahrersitz 4, reduziert und diese Positionsdaten als Einstelldaten des Fahrersitzes 4 in einem Sitzdatenspeicher abgespeichert. Bei einer Restaurierung, d.h. einem Abruf und Wiedereinstellen dieser Sitzeinstellung erfolgt die Einstellung des Fahrersitzes 4 im wesentlichen durch eine Positionierung des betreffenden Fahrers innerhalb der Fahrgastzelle 10 bis zur Erreichung der abgespeicherten Positionsdaten. Somit werden mögliche alterungs- und verschleißbedingte geometrische Veränderungen des Fahrersitzes 4 automatisch ausgeglichen. Die Information der Positionierung der Fahrzeuginsassen kann vorteilhaft auch zur adaptiven Steuerung der Airbags verwendet werden, sofern diese hinsichtlich ihres Auslös- und Entfaltungsverhaltens variabel steuerbar sind.

Zur Verbesserung der Erfassbarkeit der 3D-Oberflächenkontur der Fahrzeuginsassen kann die stereoskopische Optik 7, wie in Fig. 1 dargestellt, neben den beiden CCD-Kameras 8, 9 eine zusätzliche CCD-Kamera 18 umfassen, die zur Kompensation von Hinterschneidungen für eine der vorhandenen CCD-Kameras 8, 9 zweckmäßig mit ihrer optischen Achse 19 zu der durch die optischen Achsen 15, 16 der vorhandenen CCD-Kameras gebildeten Ebene geneigt angeordnet ist. Vorliegend ist die zusätzliche CCD-Kamera 18 mittig ober- oder unterhalb der Frontscheibe 20 des Kraftfahrzeuges 1 angeordnet, bei einer Platzierung der vorhandenen CCD-Kameras 8, 9 im Bereich des Armaturenbrettes 21 in der Nähe des Fahrzeugdaches 22, bei einer Platzierung der CCD-Kameras 8, 9 in der Nähe des Fahrzeugdaches 22 im Bereich des Armaturenbrettes 21. Der Erfassungsbereich 23 der zusätzlichen CCD-Kamera 18 überdeckt dabei den gemeinsamen Erfassungsbereich 17 der beiden CCD-Kameras 8, 9.

Die erfindungsgemäße Sitzeinstellvorrichtung ist aufgrund preiswert verfügbarer kleiner CCD-Videokameras bzw. Digitalkameras und Bilddatenrechner kostengünstig realisierbar und in Kraftfahrzeuge integrierbar. Im Vergleich zu umfangreicher Sitzsensorik (Stand der Technik) wird durch die Nutzung der vorgeschlagenen Sitzeinstellvorrichtung und des betreffenden Steuerungsverfahrens ein Kostenvorteil und eine höhere Betriebssicherheit erzielt. Soll die Sitzeinstellvorrichtung auch bei Dunkelheit verfügbar sein, so werden zweckmäßig anstelle der CCD-Videokameras Infrarot-CCD-Kameras verwendet.

## Patentansprüche

1. Sitzeinstellvorrichtung eines Kraftfahrzeuges, mit einer Sitzdatenerfassungseinrichtung zur Ermittlung von einer Sitzeinstellung eines Fahrzeugsitzes zugeordneten Einstelldaten, einem Sitzdatenspeicher zur Abspeicherung der Einstelldaten, und einer Sitzsteuerungsvorrichtung zur Einstellung einer vorgegebenen Sitzeinstellung anhand der zugeordneten Einstelldaten, wobei der Fahrzeugsitz zur Realisierung vielfältiger Einstellmöglichkeiten mehrere ansteuerbare Stellmotoren aufweist, **dadurch gekennzeichnet, dass** die Sitzdatenerfassungseinrichtung (6) als stereoskopische Optik (7) mit einem zugeordneten Bilddatenrechner ausgebildet ist, und dass die stereoskopische Optik (7) innerhalb der Fahrgastzelle (10) des Kraftfahrzeuges (1) mit Blickrichtung auf die Sitzflächen des Fahrzeugsitzes (2) angeordnet ist.

2. Sitzeinstellvorrichtung nach Anspruch 1, **dadurch gekennzeichnet, dass** die stereoskopische Optik (7) zwei seitlich beabstandet voneinander angeordnete CCD-Kameras (8, 9) umfasst, und dass die CCD-Kameras (8, 9) ortsfest in dem Kraftfahrzeug (1) befestigt sind.

3. Sitzeinstellvorrichtung nach Anspruch 1, **dadurch gekennzeichnet, dass** die stereoskopische Optik (7) eine einzige CCD-Kamera umfasst, und dass die CCD-Kamera mittels eines Kamera-Stellantriebes und einer Führungsvorrichtung zwischen zwei seitlich voneinander beabstandeten Positionen verfahrbar ist.

4. Sitzeinstellvorrichtung nach einem der Ansprüche 1 bis 3, **dadurch gekennzeichnet, dass** die stereoskopische Optik (7) zur Erfassung mindestens eines der Vordersitze (4, 5) im vorderen Bereich der Fahrgastzelle (10) des Kraftfahrzeuges (1) mit rückwärtiger Blickrichtung auf den betreffenden Fahrzeugsitz (4, 5) angeordnet ist.

5. Sitzeinstellvorrichtung nach Anspruch 2 und 4, **dadurch gekennzeichnet, dass** die CCD-Kameras (8, 9) beidseitig im Bereich der A-Säulen (11, 12) des Kraftfahrzeuges (1) angeordnet sind.

6. Sitzeinstellvorrichtung nach Anspruch 3 und 4, **dadurch gekennzeichnet, dass** die CCD-Kamera zwischen zwei im Bereich der A-Säulen (11, 12) des Kraftfahrzeuges (1) liegenden Positionen verfahrbar ist.

7. Sitzeinstellvorrichtung nach einem der Ansprüche 1 bis 6, **dadurch gekennzeichnet, dass** zur besseren Erfassung der Fahrzeuginsassen und / oder der Fahrzeugsitze (2) mindestens eine zusätzliche CCD-Kamera (18) vorgesehen ist, deren optische Achse (19) zu der durch die optischen Achsen (15, 16) gebildete Ebene der stereoskopischen Optik (7) geneigt ist.

8. Sitzeinstellvorrichtung nach Anspruch 7 und 5 oder 6, **dadurch gekennzeichnet, dass** die zusätzliche CCD-Kamera (18) mittig ober- oder unterhalb der Frontscheibe (20) des Kraftfahrzeuges (1) angeordnet ist.

9. Sitzeinstellvorrichtung nach einem der Ansprüche 1 bis 8, **dadurch gekennzeichnet, dass** zur Kompensation von optischen Störungen eine stereoskopische Zusatzoptik vorgesehen ist, wobei durch die stereoskopische Zusatzoptik Bilder in einem von der vorhandenen stereoskopischen Optik (7) abweichenden Frequenzbereich erfassbar sind.

10. Sitzeinstellvorrichtung nach Anspruch 9, **dadurch gekennzeichnet, dass** die stereoskopische Zusatzoptik als IR-Optik ausgebildet ist, durch die Infrarot-Bilder erfassbar sind.

11. Verfahren zur Steuerung einer Sitzeinstellvorrichtung, nach dem mit einer Sitzdatenerfassungseinrichtung die einer Sitzeinstellung eines Fahrzeugsitzes zugeordneten Einstelldaten erfasst werden, die Einstelldaten in einem Sitzdatenspeicher abgespeichert werden, und mittels einer Sitzsteuerungsvorrichtung eine vorgegebene Sitzeinstellung anhand der Einstelldaten eingestellt wird, **dadurch gekennzeichnet, dass** mittels einer stereoskopischen Optik (7) Bilder im Bereich der Sitzflächen des Fahrzeugsitzes (2) aufgenommen werden, dass die Bilder in einem zugeordneten Bilddatenrechner zu Geometriedaten einer 3D-Oberflächenkontur ausgewertet werden, dass die Geometriedaten in einem Sitzdatenrechner zu signifikanten Positionsdaten reduziert werden, und dass die Positionsdaten als Einstelldaten des Fahrzeugsitzes (2) verwendet werden.

12. Verfahren nach Anspruch 11, **dadurch gekennzeichnet, dass** in einem Speichermodus die ermittelten Positionsdaten als Einstelldaten des Fahrzeugsitzes (2) in dem Sitzdatenspeicher abgespeichert werden.

13. Verfahren nach Anspruch 11 oder 12, **dadurch gekennzeichnet, dass** in einem Abrufmodus die ermittelten Positionsdaten mit den abgespeicherten Einstelldaten des Fahrzeugsitzes (2) verglichen werden, und dass der Fahrzeugsitz (2) mittels der Sitzsteuerungsvorrichtung über einen Steueralgorithmus zielgerichtet verstellt wird, bis die ermittelten Positionsdaten innerhalb einer vorgegebenen Toleranz mit den abgespeicherten Einstelldaten übereinstimmen.

14. Verfahren nach einem der Ansprüche 11 bis 13, **dadurch gekennzeichnet, dass** bei leerem Fahrzeugsitz (2) Geometriedaten der 3D-Oberflächenkontur des Fahrzeugsitzes (2) ermittelt und zu signifikanten Positionsdaten des Fahrzeugsitzes (2) reduziert werden.

15. Verfahren nach einem der Ansprüche 11 bis 13, **dadurch gekennzeichnet, dass** bei besetztem Fahrzeugsitz (2) Geometriedaten der 3D-Oberflächenkontur des Fahrzeuginsassen und des Fahrzeugsitzes (2) ermittelt und zu signifikanten personenbezogenen Positionsdaten des Fahrzeugsitzes (2) reduziert werden.

16. Verfahren nach Anspruch 15, **dadurch gekennzeichnet, dass** der Fahrzeuginsasse vor dem Abspeichern einer Sitzeinstellung und / oder vor dem Abruf einer gespeicherten Sitzeinstellung zur Einnahme einer Fahrhaltung aufgefordert wird.
